# EUROPEAN PATENT SPECIFICATION

(11) **EP 1 258 157 B1**
(45) Date of publication and mention of the grant of the patent: **26.05.2010**
(21) Application number: 01902934.7
(22) Date of filing: 31.01.2001
(51) Int. Cl.: H04W 4/24

(54) **PAYMENT VALIDATION IN THE PROVISION OF TELECOMMUNICATION SERVICES**
ZAHLUNGSVALIDIERUNG ZUR BEREITSTELLUNG VON TELEKOMMUNIKATIONSDIENSTEN
VALIDATION DE PAIEMENT POUR LA MISE EN OEUVRE DE SERVICES DE TELECOMMUNICATIONS

(30) Priority: 01.02.2000 SE 0000331
(43) Date of publication of application: 20.11.2002
(73) Proprietor: TELIASONERA AB, 106 63 Stockholm (SE)
(72) Inventor: JOHANSSON, Martin, S-865 53 Sundsvall (SE); BRAVO, Oscar, S-113 41 Stockholm (SE)
(74) Representative: Hopfgarten, Nils
(86) International application number: PCT/SE2001/000185
(87) International publication number: WO 2001/058199

(56) References cited:
- EP-A2- 0 903 888
- WO-A1-00/72572
- WO-A1-97/26739
- WO-A1-99/36875
- WO-A1-99/65186
- SE-A- 9 802 541
- YONG-HOON KIM ET AL.: 'Open architecture of accessing internet and its convent providers for the web infoshop node' INFORMATION, COMMUNICATIONS AND SIGNAL PROCESSING, 1997, ICICS, PROCEEDING OF 1997 INTERNATIONAL CONFERENCE ON vol. 1, 09 September 1997 - 12 September 1997, pages 143 - 147, ISBN 0-7803-3676-3, XP002941327
- MARQUEZ-VILLEGAS, R.M., PARISH D.J., ATANGA F.J.: 'Statistical monitoring of users of ATM networks for charging and network management purposes' BROADBAND SERVICES, SYSTEM AND NETWORKS, SECOND INTERNATIONAL CONFERENCE ON 1993, pages 108 - 112, ISBN: 0-85296-602-4, XP002941343

## Description

### TECHNICAL FIELD

The invention is intended for a telecommunication system where the roles that are engaged in connection with utilisation of a telecommunication service have been strongly separated.

The solution according to the invention can be applied in all connections where one wants to regard the telecommunication network as a quite separate business and where the utilization of the network shall be debited and managed individually. The solution is applied to each division between the roles and implies a free-standing and transparent management of individual network flows or groups of network flows over a telecommunication network.

### PRIOR ART

Connection of subscribers has by tradition been made for a monopoly situation without any idea of supporting a lot of services, end users and service providers. PSTN (the public telephone network) has had the ability to create dedicated speech channels with fixed bandwidth.

Telecommunication based services has, from a historical point of view, been implemented in the public telephone network. New technology makes it more efficient to implement media services and products (film distribution, video conference, telephony etc) in equipment outside PSTN, for instance in servers and in the terminals of the users. This makes new demands upon the participants who are in the telecommunication market and upon the roles that these participants will adopt, i.a. for economic and regulatory reasons.

Refining of services within the field of telecommunication so that telecommunication services are provided/supplied by service providers to consumer, whereas connectivity is supplied by network provider or network operator to service providers is known i. a. from the patent application SE 98 025 41-4.

In the same patent application is also described division of connectivity into two generic and technology independent components: Network access and network flows. The concept or network access can be regarded as a topological link between the end user and the network to which the end user wants access. A network flow is defined as a bit flow between two or more network accesses point-to-point or point-to-multipoint.

WO 9936875 describes a system and a method for monitoring remote computer access and associated costs. A remotely located communication server communicates with multiple host computer networks and with a network access server. Memories contain list of authorized users for the host computer networks and a user log for user by a billing computer to generate bills.

In Yong-Hoon Kim et al., "Open Architecture of Accessing Internet and its Content Providers for the Web Infoshop Node", Information Communications and Signal Processing, 1997, ICICS, PROCEEDING OF 1997 INTERNATIONAL CONFERENCE, vol. 1, 09 September 1997 -12 September 1997, pages 143-147, ISBN 0-7803-3676-3, XP002941327 a system is disclosed having an open architecture for accessing Internet and Content Provider (CP)'s resources. Users of the system can access Internet and CP's resources without a subscribing procedure. The system provides authentication, filtering of resources and billing agency, where the billing is based on actual use and service of CP.

In WO 9965186 a similar system is described for charging the use of a packet based telecommunication network, where the charging is based on actual use and service from the service distributor.

WO 0072572, which is a prior art document under Article 54(3) EPC, discloses billing in a packet switched communication system based on Quality of Service (QoS) of the sessions in which the user is involved, separate from the physical circuits consumed. The QoS measure is combined with total packets exchanged.

Technology thus exists to manage services separately from the direct supplying (connectivity), but technology to manage debiting and payment for utilization of the connectivity is still poorly developed, especially technology to charge for the actual/real utilization of the connectivity network.

### TECHNICAL PROBLEM

By the separation of telecommunication services and connectivity, the services that are offered over a network access will be executed in an environment with a plurality of services where there are service providers (SP) , connectivity providers (CP) and end users. In that way the development of new businesses, deregulation and development of technology will be facilitated.

In this environment it is important so be able to charge for the services which actually have been utilized, the real consumption. The cost estimate for payment for that reason must take consideration i.e. what has been consumed, consumed quantity, points of time and different, quality demands which have been made by the utilizing party. The cost estimate must differentiate between delivery of connectivity and delivery of service, but also and how the connectivity ha been consumed. This is important since a plurality of providers are involved in execution of assignments to a utilizing party. When quality demands are made, the cost estimate must take into consideration both the demands that are made and delivered quality.

The cost estimate must for each current provider include information about each separate set up of a service assignment to an end user.

Mechanisms are needed both for advance payment and for payment in arrears regarding the utilization of network for services with QoS-demands.

The purpose of the patent invention is to propose a secure and reliable technology satisfying these requirements.

### TECHNICAL SOLUTION

This purpose is obtained by a method according to claim 1.

To make a solution according to the invention applicable, there must be a user party with at least one end user who has a network access. This means that at least one end user has access to the telecommunication network.

The solution according to the invention manages and debits individual network flows (or groups of them) when the network flows are based on Quality of Service (QoS). According to this solution, the one who is liable for a payment is appointed and a check of the validity of this appointment is made before a telecommunication service is activated, at which payment can be made in advance or in arrears. Basic data are created for debiting and for other management regarding concerned provider links/stages in delivery of telecommunication service. The invention provides possibility to a plurality of service providers to offer services over the same network access.

This invention is a general mechanism which realizes distribution and presentation of tickets for customers to resellers of telecommunication services and for users/end users of telecommunication services. The tickets can be paid in advance or be paid after consumption. The invention is transparent for existing infrastructure such as applications, protocol stacks and the reservation and QoS-mechanisms of the network.

The described solution implies that the user's/end user's network connection is represented by a network access, containing rules for how the network shall be used.

Utilization of a telecommunication system means that none, one or more telecommunication services will be utilized and that none, one or more connectivity networks will be concerned. By that, none, one or more service operators, and none, one or more network operators will be concerned at use of telecommunication systems.

The solution implies comprehensively:
- A "ticket" is presented over the network access towards the access node in connection with that the end user's terminal signals to the network.
- Transmitted "ticket" is validated. The requested network flow with specified QoS is established.
- If a plurality of networks flows should go together (belong to the same service), these are managed as a group.
- Information about network flow and associated ticket are supplied to the network operator's management system.
- Information is delivered recursively to the next link/stage in the delivery chain (for instance network operator → service provider → reseller).

### ADVANTAGES

The invention describes a mechanism for payment regarding the utilization of telecommunication networks, where the network utilization is included as a part in the usage of a service and where great demands are made on QoS. By utilization of the invention a plurality of service providers can offer telecommunication services over the same network access.

There is possibility for service providers and resellers to debit for service and service content, independent of the network operator. Payment can be made either in advance or in arrears.

Network, service and content have been refined to quite independent businesses run by different roles. One and the same participant, however, can act in a plurality of roles.

A so called ticket is used to appoint the liable one for payment for the use of network and provide basic data for debiting and other management for all links/stages of providers which are involved in the supply of a telecommunication service. A plurality of service providers can offer services over the same network access.

### LIST OF FIGURES

Figure 1 shows relations between roles in a telecommunication system.
Figure 2 describes the logical localization of ticket data.
Figure 3 shows distribution channels for tickets.
Figure 4 shows presentation of ticket at payment in arrears.
Figure 5 shows presentation of ticket at payment in advance.
Figure 6 shows the protocol stack in the IP-case.
Figure 7 shows an example with IP-connection via a LAN-Ethernet to an city network with broadband communication.
Figure 8 shows end users in a peer-to-peer-relation at a two-party video conference where no service provider participates in the service consumption.

### EXPLANATIONS OF TERMS

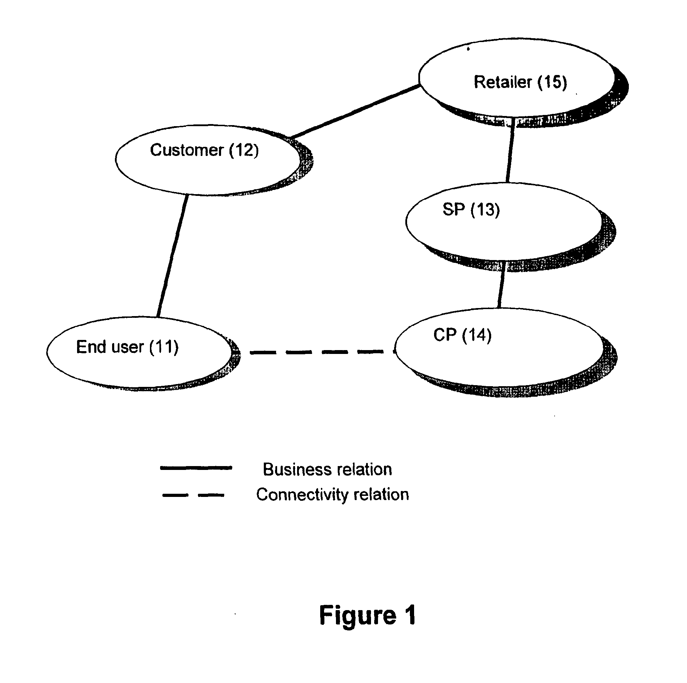

- Access node: A node between the access network and the network operator's network.
- End user, user: The one who utilizes an agreement a customer has with a reseller of telecommunication service. See Figure 1 (11). The end user can be the same as the customer.
- Best effort: Without quality demands.
- Ticket: A general mechanism which manages and debits individual network flows (or groups of them) when the network flows are based on QoS.
- Ticket gateway: A server which places network flows with specified QoS at disposal at request from a network terminal.
- CP: (Connectivity provider/supplier). Network operator or provider of connectivity. See Figure 1 (14).
- Credit ticket: Managing of tickets, for debiting of individual network flows (or groups thereof) when the network flows are based on QoS, such that payment is made in arrears based on the real use of the telecommunication network.
- IP: Internet Protocol. Communication protocol which manages addressing and routing for data packets in Internet.
- Connectivity: Establishing of bit flows from one point to one or more points, over one or more connectivity networks, with the same or different technologies.
- Connectivity network: Communicating network which is carrier of connectivity.
- Customer: The one who buys (has an agreement with reseller) and is liable for payment for the services that are offered by an SP. See Figure 1 (12).
- Network access: A topological link between the end user and the network to which the end user wants access.

- Network flow: A bit flow between one or more network accesses point-to-point or point-to-multipoint.
- Peer-to-peer: Terminals communicate on equal terms without any master or server controlling.
- PrePaid Ticket: Management of tickets, for debiting of individual network flows (or groups thereof) when the network flows are based on QoS, such that payment is made in advance and adjustment is made to the real use of the telecommunication network.
- QoS: (Quality of Service). Parameter which specifies requested performance/quality demands.
- SP: (Service Provider). Provider/supplier of telecommunication services. See Figure 1 (13).
- TCP: (Transmission Control Protocol). Protocol which divides the flow of data into packets and guarantees faultless transmission.

### DETAILED DESCRIPTION

The description below refers to the figures in the appendix of figures.

### General procedure

The mechanism according to the invention implies that the end user shows an admission ticket to the access node in connection with the reservation procedure to the network. The admission ticket (the ticket) is validated by the network and is then used by the management system in the first place to make debiting possible.

Management of the ticket includes to:
- produce/create a ticket,
- distribute ticket between providers and end users,
- present/show ticket which associates to right service provider, current end user and requested service,
- validate ticket at network operator,
- notify the content of the ticket to next provider, and
- remove ticket.

### Network access

A network access which is established for a customer has a physical and a logical dimension. The physical dimension of the network access appoints entities such as card and port numbers in the access node. The logical dimension of the network access consists of profiles which describes policy rules.

### Network operator's management of ticket

The network operator (CP) (14) issues tickets and has the responsibility to discover and extract information from the tickets when these are presented to the network. At the network operator therefore is made:
- validation of that the ticket is valid (i.a. by control of serial number).
- authorization control of the end user's rights against stored profile for the network access,
- verification that the request for reservation can be fulfilled,
- identification of requested product in the network operator's domain,
- identification of next link/stage of providers, i.e. the provider who is liable for payment for the use of the network,
- provision of service related information, such as user identity, service, date and time, to next link/stage of providers if this is requested.

### Ticket Gateway

A server function, ticket gateway, is utilized by CP to place network flows with specified QoS at disposal at request from a network terminal. A ticket gateway:
- demands ticket from consumer, alternatively finds right ticket at the end user's terminal,
- validates ticket,
- manages such network flows that belong together as a group,
- notifies the operator's management system with information about the network flow and information from the ticket,

If tickets paid in arrears (Credit Tickets) are used, also network flows or groups thereof are controled, at which also information that shall constitute basic data for debiting of the use of the network in next link of providers is collected.

If tickets paid in advance (PrePaid Tickets) are used, the ticket with associated balance is controled, and signal is given the access node when the balance has been consumed.

### Access node

The access node connected to the network is owned, alternatively controlled, by the network operator. The node detects the flow request with QoS-demands, and gives information to a ticket gateway (see above), which manages resulting network flows.

For PrePaid Tickets with associated balance, the access node disconnects a network flow in progress, or a group of network flows, when the balance is consumed. Alternatively are other measures taken according to fixed policy in this case.

### The ticket

The roles network operator (14), service provider (13) and reseller (15) can be involved in delivery to customer, i.e. excecution of a service which is requested by a user. One and the same participant can, however, act in several roles. Request for use of a service can imply that a plurality of services will be involved. In such cases a plurality of service providers can be concerned by a service. It is also possible that use of a service implies utilization of a plurality of connectivity networks at which a plurality of network operators can be engaged. One ticket is managed per requested service.

All providers who take part in executing an ordered service must keep a check on the ticket identities which are transmitted/transferred between the provider links/stages respectively from the end user. Tickets shall be possible to differentiate per
customer (liable for payment), end user or be quite independent of these,
service, group of services or to be quite independent of service,
network access, groups of network access or to be quite independent of network access.

Tickets can be used recursively for just any number of providers. The identity of the ticket can in different ways be connected to the content:
The providers can produce/create and interpret his/her information independent of other providers.
The providers can select and obtain ticket from previous provider link/stage of providers.

The ticket identity can be a serial number or consist of subidentities, one for each provider.

In the description below is described both how the network operator debits the service provider in arrears based on the actual utilization of the network in connection with utilization of services and the management when the end user or she service the provider already in advance has paid for a certain use of the network.

### Relations

The service provider makes an agreement with the network operator about using the network for a specific product, i.e. a telecommunication service.

Payment in arrears means either:
- that the network operator debits the service provider for use of network caused by the customers of the resellers of the service provider having utilized services that loads/charges the network, or
- that the network operator debits the service provider's reseller's customer (or other end user who has utilized services with permission from said customer) for the use of network which is caused by said customer having utilized services which loads/charges the network.

At use is required that the end user presents/shows a ticket regarding mentioned network access at utilization of services over said network access.

At payment in arrears, a Credit Ticket is presented and at payment in advance a PrePaid Ticket is presented over the network access in question. A PrePaid Ticket is paid in advance , normally by service provider or reseller, but can alternatively be paid by the service provider's reseller's customer or end user.

### Network operator

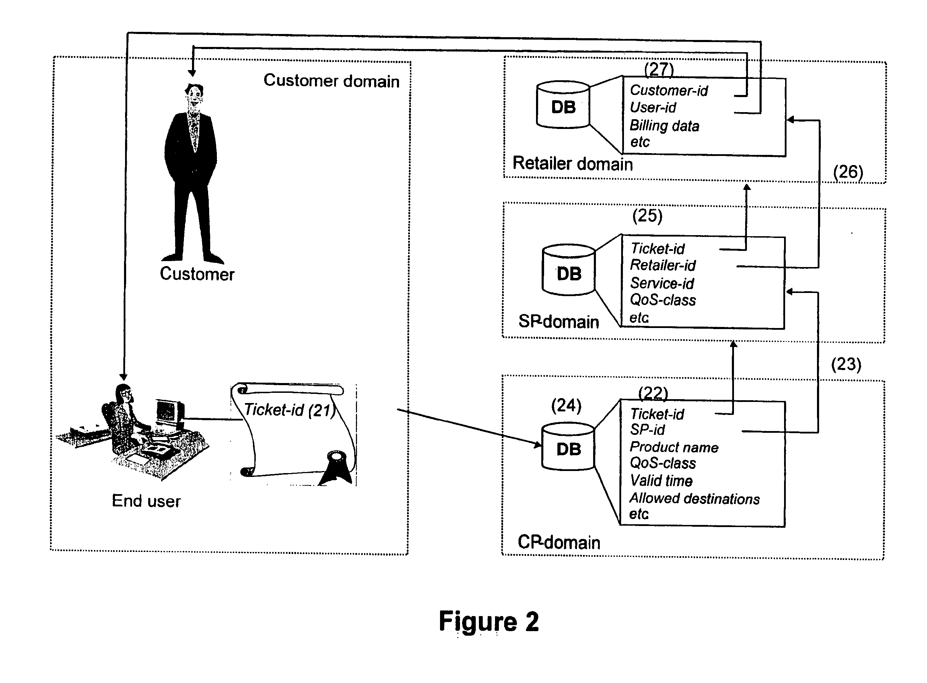

Figure 2 describes the logical localization of ticket data.

A ticket which is produced is allocated an identity. The ticket identity indicates directly or indirectly the type of ticket, Credit Ticket or PrePaid Ticket, for instance by number management at the network operator.

The content of the ticket can be managed in different ways, for instance:
1. The network operator's data (22) are included in the ticket together with the identity. The whole ticket is delivered (23) to the service provider. Data in the ticket which do not belong to the network operator are notified to the service provider when the ticket is presented by the end user or the customer.
2. The network operator's data are stored in a ticket gateway (24). The ticket, which is delivered (23) to the service provider, is managed as an identity and is notified to the service provider when the ticket is presented by the end user or the customer.

Typical network operator data (22) are ticket identity, the service provider's identity, product name, allowed classes of network quality, period of validity, valid calendar day, valid point of time and allowed destinations.

The ticket identity can be used by the service provider as a key to stored information regarding service data.

### Service provider

Data in a ticket can be managed according to the two exemplified alternatives described above:
1. The service provider fills tickets with the service provider's data (25). All content in ticket which does not belong to the service provider is notified to the reseller (26).
2. The service provider's data are stored within the service provider's domain (25). The ticket identity is delivered to the reseller (26). This identity will later be notified to the reseller.

Typical service provider data are reseller identity, identity for service and service quality class.

For tickets according to case 2 above is also used ticket time by resellers to relate to stored information regarding the customer part of the ticket.

### Resellers

Data can be managed according to the two exemplified alternatives described above:
1. The reseller fills tickets with reseller data. Data can be added in a data field via interface at the reseller, for instance Web, telephone or telefax.
2. Reseller data are stored in the reseller's database. A ticket containing only the original identity is delivered to end user or customer, in which case it will not be possible to distinguish between different end users at one and the same customer if not the whole chain is repeated per end user.

Typical reseller data are user identity and billing information.

An end user who buys an instance (i.e. an execution) of a service manages a ticket, which later is presented to the network when the service is used.

### Distribution of tickets

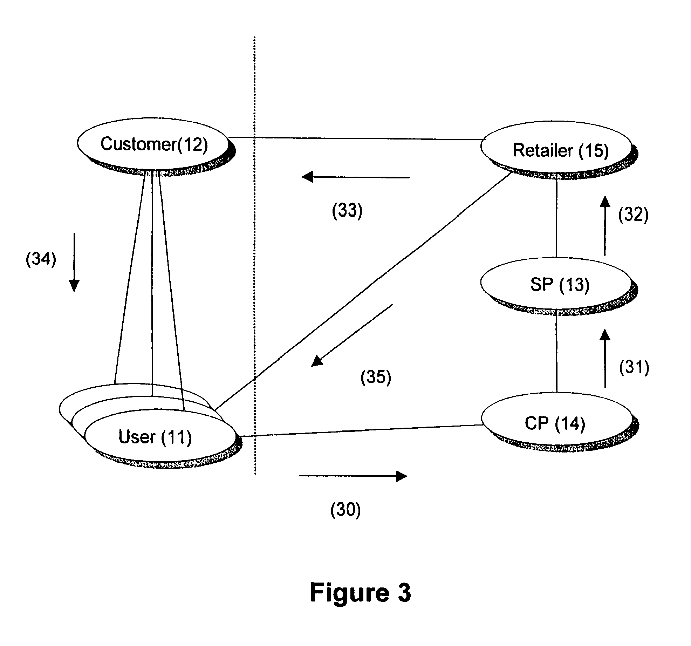

Distribution channels for tickets are illustrated in Figure 3.

A ticket is supplied from the end user to CP (30).

Ticket with associated network operator data is supplied to service provider (31).

Service provider data are associated to the ticket which is supplied to reseller (32)

Reseller's data are associated to ticket which is supplied to customer according to one of a number of variants:
- Customer buys services from a reseller and receives a number of tickets (33). These are after that distributed to end users within the customer domain (34). The procedure can be suitable for company customers.
- Users can, with admission of the customer, acquire tickets from the reseller (35) to consume ad hoc in real time. The procedure can be suitable for private customers who are using Credit Tickets.
- The users can, with admission of the customer, acquire tickets form the reseller (35) to consume ad hoc in real time. The customer has an account at the reseller from which the tickets are deducted. The procedure can be suitable for private customers who are using PrePaid Tickets.

### Presentation of tickets

When the end user calls a service which demands QoS, a ticket shall be presented to the access node. This can be made via the reservation protocol (if this supports tickets) or via software in, or in connection to, the access equipment which is receiver of tickets from the end user's network terminal. The identity of the ticket, and maybe also content (if the ticket contains information), is then presented further to the next link/stage in the chain.

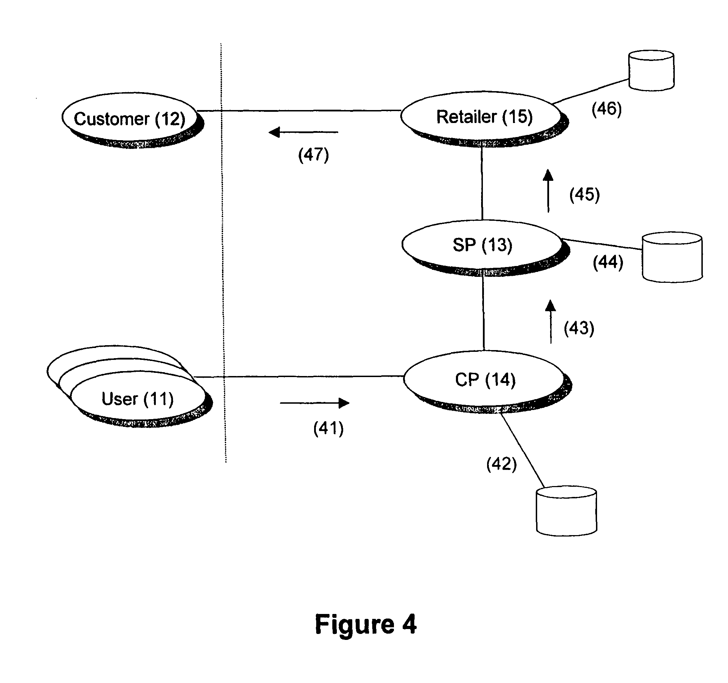

At use of Credit Tickets is notification made from network operator to service provider (43), and from service provider to reseller (45) (see figure 4):
1. When the end user via his/her service application initiates a QoS network flow, also the customer's (Credit)ticket is presented directly or indirectly (41).
2. The access node sends request to a so called ticket gateway which receives and checks tickets (42). If the ticket is valid and the network can fulfil the demands the reservation implies, the network operator's management system is notified. In the notification is included, in addition to the ticket, network specific parameters for the network flow, such as destination address and point of time for the reservation.
   Information about the network flow is stored in a debiting post (CDR) based on network use. Debiting information that is stored are typically SP-id, network flow-id, connectivity product-id, QoS, starting time, stop time, source address and destination address.
3. The identity of the ticket and possibly also content plus debiting post are notified in concerned SP (43).
4. SP extracts SP-related data. Data about the service use are stored in a debiting post (CDR) based on service use. Debiting data which are stored are typically: Reseller-id, service-id, QoS, starting time and stop time (44)
5. The ticket information (ticket content without SP-related data or only identity) is notified to concerned reseller (45).
6. The reseller extracts and stores reseller related data (46) i.a. to know where the bill is to be sent when CDR from SP has been received. Data that are stored are typically: Customer-id and end user-id etc (44).
7. The reseller can debit (47) the customer who is responsible for the end user's use of the service.

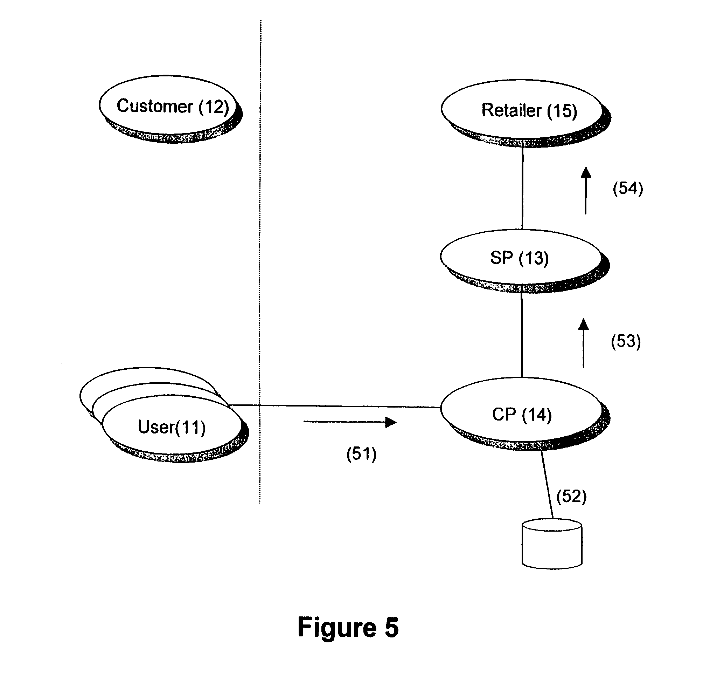

The process is simpler if PrePaid Tickets are used and then comprises only communication between end user and network operator if no follow-up shall be made at SP (see Figure 5):
1. When the end user via his/her service application initiates a QoS network flow, also the end user's ticket is presented/shown directly or indirectly (51).
2. The access node transmits/sends request to a ticket gateway which receives and checks tickets. If the ticket is valid, and the network can fulfil the demands the reservation implies, the network operator's management system is notified. In the notification is included, in addition to ticket, network specific parameters for the network flow, such as destination address and point of time for the reservation. Data about the network flow are stored in a log for follow-up. Examples of data which are stored are: SP-id, network flow-id, connectivity product-id, QoS, starting time, stop time, source address and destination address (52).

If receiving parties have demands on follow-up there will be added:
3. The identity of the ticket and possibly also content plus debiting post are notified to concerned SP (53).
4. The ticket information (ticket content without SP-related data or only identity) is notified to concerned reseller (54).

### Validation of tickets

Validation of a ticket is made in a ticket gateway. The validation includes:
- check of the validity such as current period of validity, valid issuer via the ticket identity,
- supervision/control of quality, i.e. the reserved quality is matched to the quality which actually has been achieved in the network,
- identification of debiting information, which shall be collected. This function can be made simpler for PrePaid Tickets than when payment is made in arrears.

When the validation is finished and acknowledged, go-ahead signal is given to the access router or corresponding to proceed with the reservation.

### Alternative presentation of tickets

The procedure for presentation of tickets will be somewhat Modified if the reservation protocol does not support tickets but tickets are requested by software in or in connection with the access equipment.

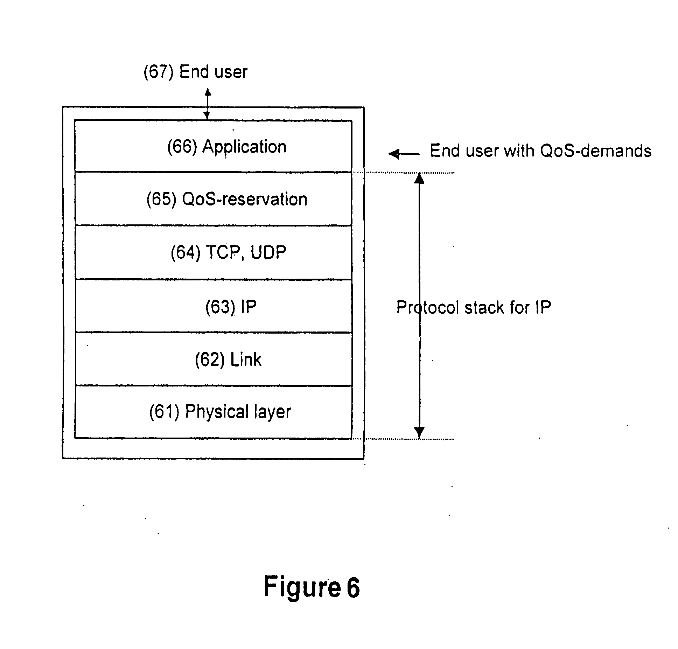

The information that can be obtained from the network is decided by the datagrams which are delivered, for instance via TCP/IP respective UDP/IP. On top of this there is some form of reservation mechanism; one example can be RSVP. It should, however, be noted that tickets function for any protocol stacks which offer QoS, such as ASM, ISDN and DTM. Much simplified, the protocol stack in the IP-case will contain the layers which are shown in Figure 6:
6. Application software at the end user (66)
5. QoS-reservation (65)
4. TCP, UDP (64)
3. IP (63)
2. Link (62)
1. Physical layer (61)

The layers 1 to 6 constitute protocol stack for IP-based applications. User functions (67) are located above the application programs.

An access router which supports tickets will for each IP-datagram have a selection between two alternatives:
1. Bring the ticket forward to next router.
2. Initiate current ticket gateway via any protocol.

A ticket gateway is a server which can use existing policy protocols, for instance COPS. A ticket gateway is not only limited to information from the IP-datagram but has also an application dimension.

With existing or coming reservation respective policy protocol is supposed that a ticket gateway can get values according to the following IP-diagram:
Source addr: xxx.xxx.xxx.xxx
Source port: xx
Dest Addr: yyy·yyy·yyy·yyy
Dest port: yy
Protocol: TCP/UDP
ToS: 0 or >0

By means of these parameters the software that requests tickets from a user terminal can request right ticket.

There are two cases for the parameters "Destination address" and "Destination port" in the IP-datagram:
- Static: The user application knows in advance which "Destination address" and "Destination port" that shall be called: The parameters (destination address + destination port) appoint a specific ticket stored in the end user's terminal
- Dynamic: The user application does not know in advance "Destination address" and "Destination port", but this is decided via signaling or in another way, for instance by the H.323-protocol. The
parameters (source address + source port) are, however, known. In this case it is not possible to make any distinct mapping between ticket and the parameters. A procedure where the service provider is involved to find ticket will be necessary.

### Examples of embodiment

The embodiment example describes both the management when the network operator debits the service provider in arrears on basis of the actual utilization of network in connection with utilization of services and the management when the end user or the service provider already in advance has paid for a certain use of the network.

The service provider makes, according to this example, an agreement with the network operator about using the network for two products, which we can call network flow product type A and network flow product type B.

At payment in arrears is then needed that the end user presents a Credit Ticket over the network access at the utilization of services which are carried by A or B.

At payment in advance is then required that the end user presents a PrePaid Ticket over the network access at utilization of services which are carried by A or B.

Tickets for A and B are produced/created and allocated identities. The ticket identity indicates directly or indirectly the type of ticket, Credit Ticket or PrePaid Ticket, for instance by number management at the network operator.

The network operator's data are included in the ticket together with the identity. The whole ticket is delivered to the service provider.

The service provider fills the tickets with the service provider's data. All content in ticket that does not belong to the service provider is notified to the reseller.

The reseller fills the tickets with reseller data in a data field via interface at the reseller, for instance Web, telephone or telefax.

The end user who buys an instance (i.e. an execution) of each of two services obtains two tickets which are presented to the network when the services are used.

### Examples of application

If the end user's terminal is individually connected to the connectivity network, it is possible to identify end users who initiate QoS network flows with the aim that the provider shall have possibility to debit the use of the connectivity network. This is the case when the network access utilizes a physical access network individually, for instance broadband transmission on copper pairs via ADSL-modems.

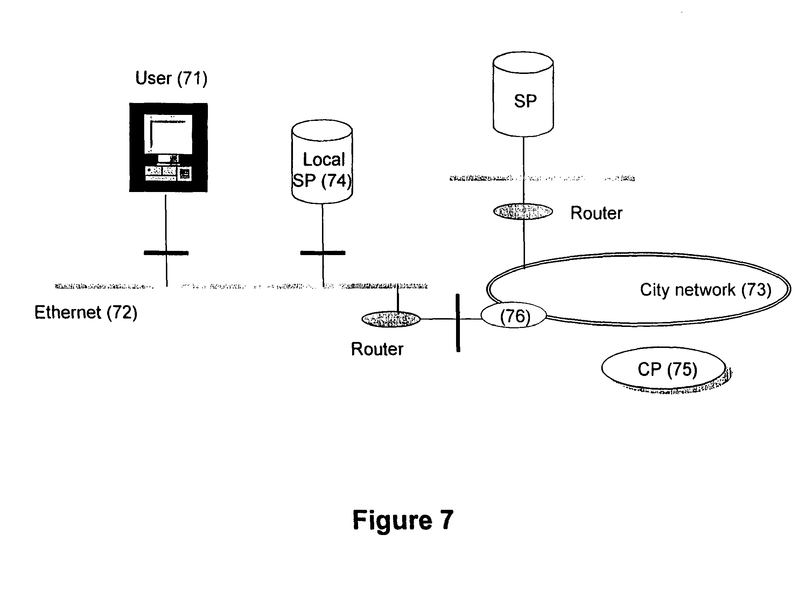

It is also possible to identify end users if the end user's terminal (71) is group connected to the network, see Figure 7. The network access then utilizes a physical access network collectively, but by tickets the end user or the terminal can be individualized. Example: IP-connection on a LAN Ethernet (72) to a broadband city network (73). The ticket can be derived from a local SP (74) by CP (75) via an access gateway or access router (76).

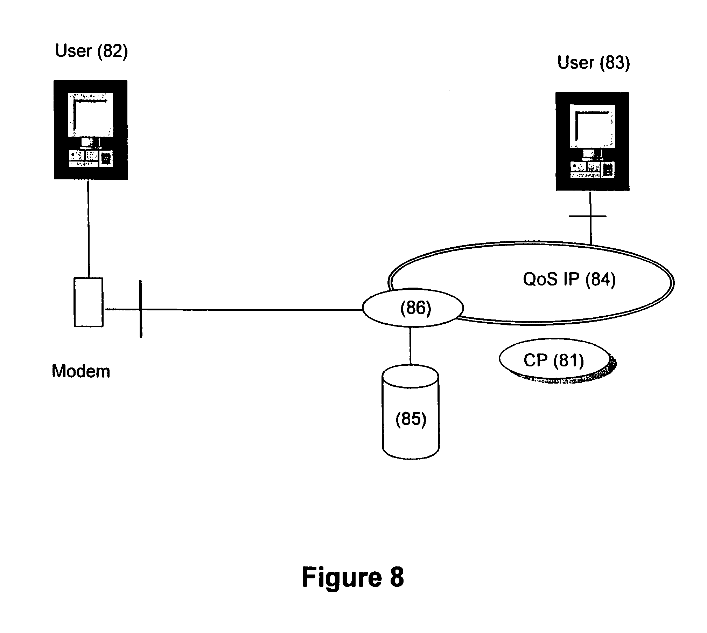

In Figure 8 is illustrated how the users 182, 83) can act in a peer-to-peer relation, for instance in a two-party video conference over a network (84). No service provider participates in the accomplishing of services. The service providers have "delegated" the authorization control and the debiting of the users to the network operator (81) who has a ticket gateway (85) which communicates via an access router (86).

The authorization control and the debiting can in this case be made by means of tickets.

In contrast to a peer-to-peer relation, the users can act in client/server relation. A web-server changes from best effort to QoS-traffic when a video film shall be transmitted to an end user. In this case the owner of the server is involved in the accomplishing of service (in the network access which connects the server to the network) whereas the end user is in the network access that acts as client. In the server there are authorization controls since video films are transmitted to members only, but this does not influence how the network operator designs his/her own control functions with tickets to provide Qos-traffic.

The invention is not limited to the above described embodiments, but can in addition be subject to modifications within the scope of the following claims.

## Claims

1. A method to manage the network flows of bits between two or more network accesses point-to-point or point-to-multipoint in a telecommunication system where the roles, which are engaged in connection with execution of a telecommunication service are separated participants which include at least service provider (13), i.e. provider of said telecommunication service, network operator (14), i.e. provider of connectivity in a connectivity network in said telecommunication system, and reseller of said telecommunication service (15), wherein the same organization or participant can be responsible for one or more of said roles, and at least one user (11) has network access, and wherein the utilization of said connectivity network in connection to that mentioned user executes the mentioned telecommunication service through the mentioned network access based on Quality of service QoS, **characterized in that** an electronic signal, referred to as ticket, which contains data that can be identified is presented over the network access in connection with a request for activation of said telecommunication service, whereby one who is liable for payment for certain use of said connectivity network in connection with the execution of the telecommunication service is appointed by the ticket, wherein before said telecommunication service is activated, a check is made of the validity of said ticket, namely check of period of validity and issuer by a ticket gateway (24) at said network operator (14), and **in that** debiting of said utilization of the connectivity network is based on the QoS.

2. A method as claimed in claim 1, **characterized in that** payment for said utilisation of the connectivity network is made in arrears and basic data are collected for said debiting of utilisation of the connectivity network.

3. A method as claimed in claim 1, **characterized in that** for the load of the connectivity network, which is caused by utilization of telecommunication service, the network operator (14) debits said service provider (13), said reseller (15), customer (23) to said operator (14) debits said service provider (13), said reseller (15), customer (23) to said reseller who buys services from a reseller and obtains a number of tickets which are distributed to users (11), or said user who has utilized said communication service with permission from said customer.

4. A method as claimed in claim 3, **characterized in that** a plurality of services providers (13) offer services over the same network access.

5. A method as claimed in any of the previous claims, **characterized in that** said debiting is based on individual network flows or groups of network flows.

6. A method as claimed in any of the claims 3 to 5, **characterized in that** said service provider (13) makes an agreement with said network operator (14) about using said connectivity network for said telecommunication service.

7. A method as claimed in any of the previous claims, **characterized in that** said request for activation of said telecommunication service emanates from a terminal (71) at a user.

8. A method as claimed in any of the previous claims, **characterized in that** it is a part of said roles to keep a check on the identity of said ticket, which is related to said telecommunication service, and that said ticket or information about said ticket is transmitted between said roles.

9. A method as claimed in any of the previous claims,
**characterized in:**
• **that** data related to said ticket are included in the ticket together with the identity of the of the ticket, or
• **that** data related to said ticket are stored in a data storage or a server.

10. A method as claimed in claims 1 and 3,
**characterized in:**
• **that** said customer (23) buys said telecommunication service from said reseller (15) and obtains a number of said tickets (33), which are distributed to said users (34),
• **that** said user or said customer procures a number of said tickets (33) from said reseller (35) to consume ad hoc in real time,
• **that** said tickets are connected to account at said reseller, and
• **that** cost for utilization of said connectivity network is deducted against said account.

11. A method as claimed in claims 1, 2 and 3,
**characterized in:**
• **that** said customer (23) buys said telecommunication service from said reseller (15) and obtains a number of said tickets (33), which are distributed to said users (34),
• **that** said user or said customer procures a number of said tickets (33) from said reseller (35) to consume ad hoc in real time.

## Patentansprüche

1. Verfahren zum Verwalten der Netzströme von Bits zwischen zwei oder mehr Netzzugängen von Punkt zu Punkt oder von Punkt zu Mehrpunkt in einem Telekommunikationssystem, bei dem die Rollen, die sich in Verbindung mit der Ausführung eines Telekommunikationsdienstes beschäftigen, getrennte Teilnehmer sind, welche wenigstens einen Dienstanbieter (13), das heißt einen Anbieter des Telekommunikationsnetzes, einen Netzbetreiber (14), das heißt einen Anbieter von Konnektivität in einem Konnektivitätsnetz in dem Telekommunikationssystem, und einen Wiederverkäufer des Telekommunikationsdienstes (15) einschließt, wobei die selbe Organisation oder der selbe Teilnehmer für eine oder mehrere der Rollen verantwortlich sein kann und wenigstens ein Benutzer (11) Netzzugang hat, und wobei die Verwendung des Konnektivitätsnetzes in Verbindung mit dem erwähnten Benutzer den erwähnten Telekommunikationsdienst durch den erwähnten Netzzugang beruhend auf der Dienstqualität QoS ausführt, **dadurch gekennzeichnet, dass** ein elektronisches Signal, das als ein Ticket bezeichnet wird, das Daten enthält, die identifiziert werden können, über den Netzzugang in Verbindung mit einer Anforderung für Aktivierung des Telekommunikationsdienstes dargeboten wird, wobei jemand, der für Bezahlung einer gewissen Benutzung des Konnektivitätsnetzes in Verbindung mit der Ausführung des Telekommunikationsdienstes verantwortlich ist, durch das Ticket ernannt wird, wobei, bevor der Telekommunikationsdienst aktiviert wird, eine Prüfung der Gültigkeit des Tickets, nämlich eine Prüfung der Gültigkeitsperiode und des Ausstellers durch ein Ticketgateway (24) bei dem Netzbetreiber (14) durchgeführt wird, und dass die Rechnungsstellung für die Verwendung des Konnektivitätsnetzes auf die QoS gegründet wird.

2. Verfahren nach Anspruch 1, **dadurch gekennzeichnet, dass** die Bezahlung für die Verwendung des Konnektivitätsnetzes hinterher vorgenommen wird und grundlegende Daten für die Rechnungsstellung der Verwendung des Konnektivitätsnetzes gesammelt werden.

3. Verfahren nach Anspruch 1, **dadurch gekennzeichnet, dass** für die Belastung des Konnektivitätsnetzes, die durch Verwendung von einem Telekommunikationsdienst bewirkt wird, der Netzbetreiber (14) dem Dienstanbieter (13) Rechnung stellt, der Wiederverkäufer (15), der Kunde (23) des Betreibers (14) dem Dienstanbieter (13) Rechnung stellt, der Wiederverkäufer (15), der Kunde (23) des Wiederverkäufers, der Dienste von einem Wiederverkäufer kauft und eine Anzahl von Tickets erhält, die an Benutzer (11) verteilt werden, oder zu dem Benutzer, der den Kommunikationsdienst mit Erlaubnis von dem Kunden benutzt hat.

4. Verfahren nach Anspruch 3, **dadurch gekennzeichnet, dass** eine Mehrzahl von Dienstanbietern (13) Dienste über den selben Netzzugang anbietet.

5. Verfahren nach einem der vorangehenden Ansprüche, **dadurch gekennzeichnet, dass** die Rechnungsstellung auf individuelle Netzströme oder Gruppen von Netzströmen gegründet wird.

6. Verfahren nach einem der Ansprüche 3 bis 5, **dadurch gekennzeichnet, dass** der Dienstanbieter (13) eine Übereinkunft mit dem Netzbetreiber (14) über die Benutzung des Konnektivitätsnetzes für den Telekommunikationsdienst trifft.

7. Verfahren nach einem der vorangehenden Ansprüche, **dadurch gekennzeichnet, dass** die Anforderung für Aktivierung des Telekommunikationsdienstes von einem Endgerät (71) bei einem Benutzer ausgeht.

8. Verfahren nach einem der vorangehenden Ansprüche, **dadurch gekennzeichnet, dass** es ein Teil der Rollen ist, eine Überprüfung der Identität des Tickets beizubehalten, das sich auf den Telekommunikationsdienst bezieht, und dass das Ticket oder Information über das Ticket zwischen den Rollen übertragen wird.

9. Verfahren nach einem der vorangehenden Ansprüche, **dadurch gekennzeichnet:**
- **dass** Daten, die sich auf das Ticket beziehen, in dem Ticket zusammen mit der Identität des von dem/der des Tickets eingeschlossen sind, oder
- **dass** Daten, die sich auf das Ticket beziehen, in einem Datenspeicher oder einem Server gespeichert sind.

10. Verfahren nach einem der Ansprüche 1 und 3, **dadurch gekennzeichnet:**
- **dass** der Kunde (23) den Telekommunikationsdienst von dem Wiederverkäufer (15) kauft und eine Anzahl der Tickets (33) erhält, die an die Benutzer (34) verteilt werden;
- **dass** der Benutzer oder der Kunde eine Anzahl der Tickets (33) von dem Wiederverkäufer (35) beschafft, um sie augenblicklich in Echtzeit zu konsumieren,
- **dass** die Tickets mit dem Konto bei dem Wiederverkäufer verbunden sind, und
- **dass** Kosten für die Benutzung des Konnektivitätsnetzes von dem Konto abgezogen werden.

11. Verfahren nach einem der Ansprüche 1, 2 und 3, **dadurch gekennzeichnet:**
- **dass** der Kunde (23) den Telekommunikationsdienst von dem Wiederverkäufer (15) kauft und eine Anzahl der Tickets (33) erhält, die an die Benutzer (34) verteilt werden,
- **dass** der Benutzer oder der Kunde eine Anzahl der Tickets (33) von dem Widerverkäufer (35) beschafft, um sie augenblicklich in Echtzeit zu konsumieren.

## Revendications

1. Procédé de gestion de flux binaires de réseau entre deux ou plusieurs accès de point à point ou d'un point à plusieurs points de réseau dans un système de télécommunication dans lequel les rôles, qui sont engagés en relation avec l'exécution d'un service de télécommunication sont de participants distincts qui comportent au moins un fournisseur de service (13), c'est-à-dire, un fournisseur dudit service de télécommunication, un opérateur de réseau (14), c'est-à-dire, un fournisseur de connectivité dans un réseau de connectivité dans ledit système de télécommunication, et un revendeur dudit service de télécommunication (15), dans lequel la même organisation ou le même participant peut être responsable d'un ou plusieurs desdits rôles, et au moins un utilisateur (11) dispose d'un accès au réseau, et dans lequel l'utilisation dudit réseau de connectivité en relation avec cet utilisateur mentionné exécute le service de télécommunication mentionné par l'intermédiaire de l'accès de réseau mentionné sur la base d'une qualité du service QoS, **caractérisé en ce qu'**un signal électronique, appelé ticket, qui contient des données qui peuvent être identifiées est présenté sur l'accès de réseau en relation avec une demande d'activation dudit service de télécommunication, de telle sorte que quelqu'un qui est susceptible de payer pour une certaine utilisation dudit réseau de connectivité en relation avec l'exécution du service de télécommunication est le titulaire du ticket, dans lequel avant que ledit service de télécommunication soit activé, il est réalisé un contrôle de la validité dudit ticket, à savoir, un contrôle de période de la validité et d'émetteur par un point d'accès de ticket (24) au niveau dudit opérateur de réseau (14), et **en ce que** le débit de ladite utilisation du réseau de connectivité est basé sur la qualité QoS.

2. Procédé selon la revendication 1, **caractérisé en ce que** le paiement de ladite utilisation du réseau de connectivité est fait en arriérés et des données de base sont collectées afin d'assurer ledit débit d'utilisation du réseau de connectivité.

3. Procédé selon la revendication 1, **caractérisé en ce que**, pour la charge du réseau de connectivité, qui est provoquée par l'utilisation du service de télécommunication, l'opérateur de réseau (14) débite ledit fournisseur de service (13), lesdits revendeur (15), client (23) pour ledit opérateur (14) débitent ledit fournisseur de service (13), lesdits revendeur (15), client (23) pour ledit revendeur qui paye des services à partir d'un revendeur et obtient un certain nombre de tickets qui sont distribués à des utilisateurs (11), ou ledit utilisateur qui a utilisé ledit service de communication avec l'autorisation dudit client.

4. Procédé selon la revendication 3, **caractérisé en ce qu'**une pluralité de fournisseurs de services (13) offrent des services sur le même accès de réseau.

5. Procédé selon l'une quelconque des précédentes revendications, **caractérisé en ce que** ledit débit est basé sur des flux de réseau individuels ou des groupes de flux du réseau.

6. Procédé selon l'une quelconque des revendications 3 à 5, **caractérisé en ce que** ledit fournisseur de service (13) prend un accord avec ledit opérateur de réseau (14) concernant l'utilisation dudit réseau de connectivité pour ledit service de télécommunication.

7. Procédé selon l'une quelconque des revendications précédentes, **caractérisé en ce que** ladite demande d'activation dudit service de télécommunication émane d'un terminal (71) chez un utilisateur.

8. Procédé selon l'une quelconque des revendications précédentes, **caractérisé en ce qu'**une partie desdits rôles consiste à maintenir un contrôle sur l'identité dudit ticket, qui est associé audit service de télécommunication, et **en ce que** ledit ticket ou des informations concernant ledit ticket sont transmis entre lesdits rôles.

9. Procédé selon l'une quelconque des revendications précédentes,
**caractérisé :**
**en ce que** des données associées audit ticket sont contenues dans le ticket ensemble avec l'identité (du) du ticket, ou
**en ce que** les données associées audit ticket sont mémorisées sur un dispositif de mémorisation de données ou un serveur.

10. Procédé selon les revendications 1 et 3, **caractérisé :**
**en ce que** ledit client (23) achète ledit service de télécommunication audit revendeur (15) et obtient un certain nombre desdits tickets (33), qui sont distribués auxdits utilisateurs (34),
**en ce que** ledit utilisateur ou ledit client se procure un certain nombre desdits tickets (33) auprès dudit revendeur (35) à consommer de manière appropriée en temps réel,
**en ce que** lesdits tickets sont couplés à un compte chez ledit revendeur, et
**en ce que** le coût de l'utilisation dudit réseau de connectivité est déduit dudit compte.

11. Procédé selon les revendications 1, 2 et 3, **caractérisé :**
**en ce que** ledit client (23) achète ledit service de télécommunication auprès dudit revendeur (15) et obtient un certain nombre desdits tickets (33), qui sont distribués auxdits utilisateurs (34),
**en ce que** ledit utilisateur ou ledit client se procure un certain nombre desdits tickets (33) auprès dudit revendeur (35) à consommer de manière appropriée en temps réel.
